# EUROPEAN PATENT SPECIFICATION

(11) **EP 4 187 217 B1**
(45) Date of publication and mention of the grant of the patent: **24.09.2025**
(21) Application number: 21210696.7
(22) Date of filing: 26.11.2021
(51) Int. Cl.: G01J 3/02, G01J 3/46, G01J 3/52

(54) **MOBILE COMPUTING DEVICE FOR PERFORMING COLOR FASTNESS MEASUREMENTS**
MOBILE RECHNERVORRICHTUNG ZUR DURCHFÜHRUNG VON FARBECHTHEITSMESSUNGEN
DISPOSITIF INFORMATIQUE MOBILE POUR EFFECTUER DES MESURES DE SOLIDITÉ DES COULEURS

(43) Date of publication of application: 31.05.2023
(73) Proprietor: Kuraray Europe GmbH, 65795 Hattersheim (DE)
(72) Inventor: WALLRAFEN, Patrick, 65795 Hattersheim (DE); BEERMANN, Markus, 50739 Köln (DE)
(74) Representative: Richardt Patentanwälte PartG mbB

(56) References cited:
- WO-A1-03/029811
- CN-A- 112 697 682
- US-A1- 2007 071 314
- US-A1- 2008 044 082

## Description

### Field of the invention

The invention relates to the measurement of color fastness for textiles.

### Background and related art

Color fastness of a textile is how resistant that textile is to any change in its color. This includes how resistant the textile is to staining as well as the fading of colors due to light or washing. There are industry standard techniques that are applied to textile samples to measure various types of color fastness. To assess the color fastness, an observer compares a textile under test to a reference textile and compares them to a color scale (usually a grey or blue scale) that provides a series of labeled contrasts. This observation is made under defined lighting conditions and the observer chooses the contrast on the color scale which best matches those provided on the color scale. Photometric camera systems, which have been modified and calibrated to respond to light in the same way as the human eye, are also defined in some standards for measuring color fastness.

United States patent application US 2014/0232923 A1 discloses techniques related to display of device independent color differences. In examples, a color comparison graphical user interface is operated. The GUI displays a color of a sample object. Further, the GUI displays a device independent color difference between the sample color and the reference color.

International patent application WO 03/029811 A1 discloses an apparatus and method for assessing color fastness involves the use of digital imaging means to capture an image of a test sample and a control sample. Information relating to the images of the test sample and the control sample is processed to obtain color values for each sample which may then be compared, to provide an indication of fastness based on the difference therebetween. Using the above apparatus and method, fastness may be assessed automatically.

United States patent application US 2007/071314 A1 discloses a method of compiling color analysis parameters. In one example, a corrected color description of at least one test subject is constructed. The corrected color description of at least one test subject is then accessed. The at least one test subject is assigned to a classification color according the accessed corrected color description. The said classification color is then correlated with a prescriptive recommendation.

### Summary

The invention provides for a portable computing device, and a computer program in the independent claims. Embodiments are given in the dependent claims.

A difficulty with using photometric camera systems for measuring color contrast is that specialized camera systems are needed. Expensive calibration systems may also be needed to calibrate these specialized camera systems. There has been a long felt need for systems which may be used for measuring color fastness.

However, less expensive and technically simpler camera systems are not suitable for photometric measurements: Cameras such as those used in smart phones and other mobile devices are unsuitable for photometric measurements. However, embodiments may provide for a means of using such a camera for accurately measuring colorfastness of a fabric or textile. This may be achieved by acquiring a digital image that images a color reference region with a conventional camera along with the fabric reference and the fabric sample. Accurate measurement of the color fastness may be achieved when the colorfastness value for individual pixels in a sample region, which images the fabric sample, is calculated. The pixel wise color fastness of the individual pixels is then used to calculate the color fastness value. The pixel wise color fastness calculation typically produces a distribution of color fastness values. A variety of criterion, as described below, can be used to select the color fastness value.

In one aspect the invention provides for a portable computing device that comprises a memory storing machine-executable instructions, a camera configured for acquiring a digital image, and a computational system. A portable computing device as used herein encompasses a computing device which may be carried or moved by a person or individual. For example, a portable computing device may be a smartphone, a tablet computer, a laptop computer, or other moveable computing device. In some embodiments the portable computing device may be battery powered.

Execution of the machine-executable instructions causes the computational system to control the camera to acquire the digital image. Execution of the machine-executable instructions further causes the computational system to identify a reference region within the digital image. Execution of the machine-executable instructions further causes the computational system to identify a sample region within the digital image. Execution of the machine-executable instructions further causes the computational system to identify a color reference region in the digital image.

The reference region may for example be a region which provides a textile which has been dyed. The sample region may include the textile which has been dyed after it has been subjected to a color fastness test such as being exposed to washing or rubbing or other test of color fastness. The color reference region provide either a reference for scales which are used to measure the color fastness value of the sample region or are used to calibrate the camera. In one example, the color fastness reference region comprise at least one original color region and multiple graded color regions to directly calibrate color fastness measurement. A comparison between a region of the original color region and one of the multiple graded color regions is assigned a color fastness value. In another example the color reference region provides regions of known color and/or greyscale to calibrate color measurements of the reference region and the sample region.

Execution of the machine-executable instructions further causes the computational system to calculate a pixel wise sample color distance between a sample color value of individual pixels in the sample region and a reference color region of the reference region. By pixel wise it is understood herein that the calculation is performed for each pixel in the sample region individually. Colors may be expressed in different color scales. For example, a particular color may be indicated by providing coordinates in the color space. The sample color distance is a distance calculated between two color coordinates, in this case between the sample color value of the individual pixels in the sample region and a reference color of the reference region. This pixel wise sample color distance and the sample color distance may, for example, be Euclidian distances calculated using the coordinates of the color space that is used.

Execution of the machine executable instructions further causes the computational system to receive a refence color distance for each of multiple color fastness values. This may take different forms in different examples. If the distance in color between the reference region and pixels in the sample region is in a known color space then the reference color distance is defined by the values of the greyscales themselves.

If the distance in color between the reference region and pixels in the sample region are not in a calibrated or known color space. Then measurements made on a calibrated grey scale or blue scale may be used to assign the reference color distance for each of the multiple color fastness values.

Execution of the machine-executable instructions further causes the computational system to calculate a pixel wise color fastness value of the individual pixels in the sample region by comparing each reference color distance of each of the multiple color fastness values to the pixel wise sample color distance. The pixel wise color fastness value as used herein encompasses a color fastness value that is calculated for each pixel individually. The calculation of the pixel wise color fastness value is calibrated using a color measurement of the color reference region.

Execution of the machine-executable instructions further causes the computational system to select a color fastness value for the sample region using the pixel wise color fastness value of the individual pixels in the sample region. In this step the pixel wise color fastness value of each of the individual pixels in the sample region is used to select a color fastness value. Different rules or techniques may be used in different examples or embodiments of this.

Selecting the color fastness value using the pixel wise color fastness value may have a number of advantages. Often, when color fastness tests are performed, the sample region in particular may have a non-uniform color. For example, the color fastness may not be a constant throughout an entire textile sample. It may also be the case that within the sample region only a portion of a textile which is imaged actually exhibits signs of the color fastness test. Selecting the color fastness value using the individual or pixel wise color fastness value, may be beneficial because it may enable the exclusion of certain pixels which have not been affected by a color fastness test. In some embodiments, the portable computing system may be battery powered.

In all embodiments a histogram is constructed as defined by claim 1. In one alternative of the invention the machine-executable instructions further causes the computational system to construct a value histogram by binning the pixel color values within the reference region and calculating the reference color value by determining a characteristic reference value of the value histogram. This may be beneficial because using determining the characteristic value of the value histogram may avoid noise or incorrect data.

In another alternative of the invention the value histogram is constructed using the pixel wise sample color distances instead. In this embodiment, a combined pixel wise sample color distance is calculated by determining a characteristic value of the value histogram. The color fastness value for the sample region is calculated using the combined pixel wise color fastness value.

In another embodiment execution of the machine-executable instructions further causes the computational system to calculate the reference color value by applying a statistical calculation to pixel color values within the reference color region. For example, various statistical tests such as calculating a mean, average or most likely value within the histogram could all be used for the reference color value. For example, it may again aid in the exclusion of noise or incorrect data when calculating the reference color value.

In another embodiment execution of the machine-executable instructions further causes the computational system to render a spatially dependent image of the color fastness value. For example, a grayscale or false color image could be created which provides the spatially dependent image of the color fastness value. This may for example provide more information to the user than simply providing an overall number or value which is assigned.

In another embodiment execution of the machine-executable instructions further causes the computational system to construct a color fastness value histogram from the pixel wise color fastness value of the individual pixels in the sample region. The color fastness value for the sample region is selected by determining a characteristic value of the color fastness value histogram. This for example may be beneficial when dealing with a sample region that does not have a uniform color or which has been affected non-uniformly by the color fastness test, such as washing or rubbing.

In another embodiment the characteristic value of the value histogram is determined by a maximum value of the color fastness value histogram. This applies to both embodiments that use a value histogram.

In another embodiment the characteristic value of the value histogram is determined by an average value of the color fastness value histogram. This applies to both embodiments that use a value histogram.

In another embodiment the characteristic value of the value histogram is determined by a median value of the color fastness value histogram. This applies to both embodiments that use a value histogram.

In another embodiment the characteristic value of the value histogram is determined by fitting a curve function to the value histogram. The characteristic value is a fitting parameter or a maximum value of the curve function. This applies to both embodiments that use a value histogram.

In another embodiment the characteristic value of the value histogram is determined by cropping the color fastness value histogram according to a predetermined criterion and then determining the maximum value of the value histogram, the average value of the value histogram, the median value of the histogram, or fitting the curve function to the value histogram. This embodiment may be of particular use because cropping the value histogram may be used to eliminate some portions of the sample region which were for example not affected or inconsistently affected by the color fastness test.

In another embodiment execution of the machine-executable instructions further causes the computational system to crop the value histogram according to a predetermined criterion. The pixels cropped from the histogram are excluded from the calculation of the pixel wise color fastness value. This for example may be useful for dealing with images of the sample region which depict an inconsistent or incomplete color fastness test of a fabric or textile.

In another embodiment the pixel wise color fastness value is calculated by finding the reference color distance of each of the graded color regions that is closest in value to the pixel wise sample color distance. This for example may be achieved by binning the color fastness value for each of the pixels.

In another embodiment the pixel wise color fastness value is calculated by calculating the pixel wise color fastness value as a continuous number. In this example, instead of binning the values a continuous number may be assigned to each of the pixels. Normally discreet values are assigned for the color fastness value; however, the use of a continuous number may be useful in removing noise or artifacts from the measure.

In another embodiment execution of the machine-executable instructions further causes the computational system to calculate the graded color value within each of the multiple graded color regions by applying a statistical measure to pixel color values within each of the multiple graded color regions. Execution of the machine-executable instructions further causes the computational system to calculate the original color value for the at least one original color region by applying the statistical measure to pixel color values within the at least one color region. This means of calculating the graded color value and the original color value may be successful because typically these regions are provided as color or painted regions with specific colors. The colors within these regions therefore may be very uniform from pixel-to-pixel. The statistical measure such as an average, mean or maximum value after binning may provide an accurate means of calculating the graded color value and/or the original color value. The graded color value and the original color value may then be used to calculate the reference color difference.

In another embodiment saturated pixels are excluded from calculation of the pixel wise sample color distance, the pixel wise color fastness value, the reference color distance, the reference color value, the original color value, and/or the graded color value. In other words, saturated pixels may be excluded from the calculations described above in general. This may be useful because the saturated pixels may not accurately depict the colors and/or intensity of light as measured. Excluding them may provide for an improved measurement of the color fastness value for the sample region.

In another embodiment the digital image is gamma corrected. Execution of the machine-executable instructions further causes the computational system to reverse the gamma correction before beginning calculation of the sample color distance and the reference color distance. In many devices such as the camera on a smartphone or tablet computer gamma correction is applied automatically; reversing this gamma correction may provide for more accurate determination of the color fastness value. For example, the execution of the machine-executable instructions may cause the computational system to reverse the gamma correction on the entire digital image.

In another embodiment the memory further comprises an optical marking identification module configured for recognizing and locating optical markings within the digital image. Execution of the machine-executable instructions further causes the computational system to identify the reference region within the digital image by locating optical markings within the digital image using the optical marking identification module. For example, the optical markings may be or may be analogous to QR code markings and may be used for identifying spatial locations within the digital image.

In another embodiment execution of the machine-executable instructions further causes the computational system to identify the sample region within the digital image by locating the optical markings using the optical marking identification module.

In another embodiment execution of the machine-executable instructions further causes the computational system to identify a color fastness reference region within the digital image by locating the optical markings using the optical marking identification module. The color fastness reference region corresponds to the location of the color scale in the digital image.

In another embodiment execution of the machine-executable instructions further causes the computational system to determine a sample identifier. The sample identifier is preferably appended to the color fastness value. For example, there may be numbers or optical markings which label the sample identifier. A QR code, barcode, or even a number may be depicted in the digital image. If the sample identifier is a number then an optical character recognition module may be used for reading or identifying the text in the digital image. These embodiments may be beneficial because they may provide for an effective and automatic way of identifying the different regions within the digital image.

In another embodiment the memory further contains an object detection algorithm configured to output the reference region, the sample region, each of the multiple graded color regions, and the at least one original color region in response to receiving the digital image. Execution of the machine-executable instructions further causes the computational system to receive the reference region, the sample region, each of the multiple graded color reference regions, and the at least one original color region from the object detection algorithm in response to inputting the digital image into the object detection algorithm. In this example the optical markings are not used.

As the various regions of the digital image may have consistent color and/or grayscale regions as well as other optical properties, an algorithm can be used to detect their locations without the use of optical markings. This for example may be an algorithm which is designed by hand. In other examples a neural network can be used to identify these regions automatically. The neural network could for example be trained by using a variety of digital images which have been labeled by hand. A deep learning algorithm can then be used to train the neural network.

In another embodiment execution of the machine-executable instructions further causes the computational system to determine a size and/or viewing angle of any one of the following: the reference region, the sample region, and the color fastness region, the at least one original color region, and the multiple graded color regions and then to display a repositioning indicator on the display if the size and/or viewing angle is not within a predetermined positioning range. The size and/or the viewing angle of these regions can for example be determined by determining their absolute size in a digital image as well as their shape. If they for example have a distinctive shape, such as a circle or square, then tilting at a viewing angle would cause a distortion of this. The distortion of a circular region may distort to an oval. Determination of the size and/or viewing angle can therefore be determined using standard image processing and/or segmentation techniques. The displaying of the repositioning indicator on the display may be useful because it may provide feedback and instruct the operator of the portable computing device how to move the portable computing device such that the best value for the color fastness value is determined.

In another embodiment execution of the machine-executable instructions further causes the computational system to control the camera to reacquire the digital image multiple times.

Execution of the machine-executable instructions further causes the computational system to determine the color fastness value multiple times after reacquiring the digital image.

Execution of the machine-executable instructions further causes the computational system to calculate a color fastness value calculated from the color fastness value determined multiple times. This may be implemented in a number of different ways. For example, the color fastness value may be selected for the sample region using the pixel wise color fastness values for each individual measurement. In other examples, the pixel wise color fastness value determined in each acquisition may be added to a cumulative histogram. This cumulative histogram may then be used to determine the statistical color fastness value by looking at such values as the mean, average or maximum value. When a histogram is used there may also be a trimming operation to remove noise or tails as was described previously.

In another embodiment the portable computing device further comprises a display. Execution of the machine-executable instructions further causes the computational system to display the color fastness value.

In another embodiment execution of the machine-executable instructions further causes the computational system to store the color fastness value in the memory.

In another embodiment execution of the machine-executable instructions further causes the computational system to store the color fastness value in a database via a network condition.

All three of these embodiments may be beneficial because the color fastness value for the sample region is available to a user either directly or via the memory or database.

In another embodiment execution of the machine-executable instructions further causes the computational system to determine an image quality measure of the digital image. The image quality measure may for example be a light level, a white balance check, a noise level, a sample region shape, a reference region shape, and combinations thereof.

Execution of the machine-executable instructions may further cause the computational system to display an image quality warning message on the display if the image quality measure is outside of a predetermined image quality range. This may for example be because it may be useful for identifying image problems as the operator is using the portable computing device and provide a means to immediately correct this problem. In addition or alternatively to displaying the image quality warning the determination of the color fastness value is suspended. This for example may be useful in preventing the operator from measuring the color fastness value in conditions when the image quality is too low.

In another embodiment, the color reference region is a color fastness reference region. The color fastness reference region comprises at least one original color region and multiple graded color regions. In this embodiment, receiving the reference color distance for each of the multiple color fastness values using the measurement of the color reference region comprises: calculating a measured color distance between each of the multiple graded color regions and the at least one original color region; and assigning the measured color distance of each of the multiple graded color regions to one of the multiple color fastness values to calibrate the calculation of the pixel wise color fastness value.

In another embodiment, the color refence region comprises multiple predefined color regions each with a predetermined color value in a chosen color space. In this embodiment calibration of the pixel wise color fastness value comprises: determining a measured color value in the chosen color space for each of the multiple predefined color regions; transforming the digital image to the chosen color space using a difference between the predetermined color value and the measured color value of each of the multiple predefined color regions. The transformation of the digital image to the chosen color space calibrates the calculation of the pixel wise color fastness value, wherein the reference color distance of each of the multiple color fastness values is predefined in the chosen color space. The transformation from the digital image to the chosen color space could be a linear transformation.

In another embodiment, the multiple predefined color regions are any one of the following: a grey scale or a polychromatic distribution of colors.

If the polychromatic distribution of colors is used, they may cover or bracket the whole color space or a large portion of it from darkest black to brightest white, saturated red, green, blue as well as cyan, magenta, yellow and all shades in between hues, brightnesses and saturations. If the camera to be linear, or sufficiently close to linear, or linearizable or sufficiently closely linearizable, and the measurement is performed in controlled lighting conditions (as one does in a lighting box under D65 daylight according to ISO standard), one can reduce the space of color that is covered by the calibration markers down to e.g. just the few gray color patches as given in the gray scales. One only needs a reference of overall brightness scale as well as a reference of non-saturated color, both of which are provided by the grayscale.

In another embodiment the color fastness reference region is a grayscale color fastness reference regions.

In another embodiment the color fastness reference region is a blue scale color fastness reference region.

In another embodiment the portable computing device is a smartphone, a mobile telecommunications device, a handheld computing device, or a tablet computer. The use of any of these devices may be advantageous because they are readily carried by an individual and may be used to perform the measurements.

In another embodiment the sample color difference and the reference color distance are calculated using any one of the following color scales: delta-E, delta-E₂₀₀₀ and delta-E_{CMC}. The use of any of these color coordinate systems may be advantageous because the distances can be used to compare the perceived color contrast directly by the subject.

In another aspect, the invention provides for a method of determining a color fastness value. The method comprises controlling a camera to acquire a digital image. The method further comprises identifying a reference region within the digital image. The method further comprises identifying a sample region within the digital image. The method further comprises identifying a color reference regions in the digital image.

The method further comprises receiving a reference color distance for each of multiple color fastness values. The method further comprises calculating a pixel wise sample color distance between a sample color value of individual pixels in the sample region and a reference color of the reference region.

The method further comprises calculating a pixel wise color fastness value of the individual pixels in the sample region by comparing each reference color distance of each of the multiple color fastness values to the pixel wise sample color distance. The calculation of the pixel wise color fastness value is calibrated using a color measurement of the color reference region. The method further comprises selecting a color fastness value for the sample region using the pixel wise color fastness value of the individual pixels in the sample region.

In another embodiment the method comprises preparing a textile sample and a textile reference region reference according to a color fastness test protocol. The method further comprises arranging a textile reference and sample that were prepared according to the protocol as well as a color scale within the field of view of the camera before acquiring the digital image. The color scale may for example be a gray or color scale prepared specifically for preparing or performing a color fastness test.

In another embodiment the method comprises illuminating the textile sample and the textile reference region using a predetermined lighting system. For example a particular color fastness test protocol, may specify, for example, ISO standardized lighting protocols or an ISO standard light box to be used.

In another aspect the invention provides for a computer program comprising machine executable instructions for execution by a computational system controlling a portable computing device. The computer program may for example be stored on a non-transitory storage medium. The portable computing device comprises a camera configured for acquiring a digital image.

Execution of the machine-executable instructions causes the computational system to control the camera to acquire the digital image.

Execution of the machine-executable instructions further causes the computational system to identify a reference region within the digital image.

Execution of the machine-executable instructions further causes the computational system to identify a sample region within the digital image.

Execution of the machine-executable instructions further causes the computational system to identify the color reference region in the digital image.

Execution of the machine-executable instructions further causes the computational system to receive a reference color distance for each of multiple color fastness values.

Execution of the machine-executable instructions further causes the computational system to calculate a pixel wise sample color distance between a sample color value of individual pixels in the sample region and a reference color of the reference region.

Execution of the machine-executable instructions further causes the computational system to calculate a pixel wise color fastness value for each of the individual pixels in the sample region by comparing each reference color distance of each of the multiple color fastness values to the pixel wise sample color distance. The calculation of the pixel wise color fastness value is calibrated using a color measurement of the color reference region.

Execution of the machine-executable instructions further causes the computational system to select a color fastness value for the sample region by using the pixel wise color fastness value of the individual pixels in the sample region.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system.

Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

### Brief description of the drawings

In the following embodiments of the invention are explained in greater detail, by way of example only, making reference to the drawings in which:
- Fig. 1: illustrates an example of a portable computing device;
- Fig. 1a: illustrates a further example of a portable computing device;
- Fig. 1b: illustrates a further example of a portable computing device;
- Fig. 2: illustrates an example of a digital image;
- Fig. 2a: illustrates a further example of a digital image;
- Fig. 3: illustrates a method of operating the portable computing device of Fig. 1;
- Fig. 4: illustrates an example of a value histogram;
- Fig. 5: Illustrates a view of the user interface of the portable computing device; and
- Fig. 6: Illustrates a further view of the user interface of the portable computing device.

### Detailed Description

Like numbered elements in these figures are either equivalent elements or perform the same function. Elements which have been discussed previously will not necessarily be discussed in later figures if the function is equivalent.

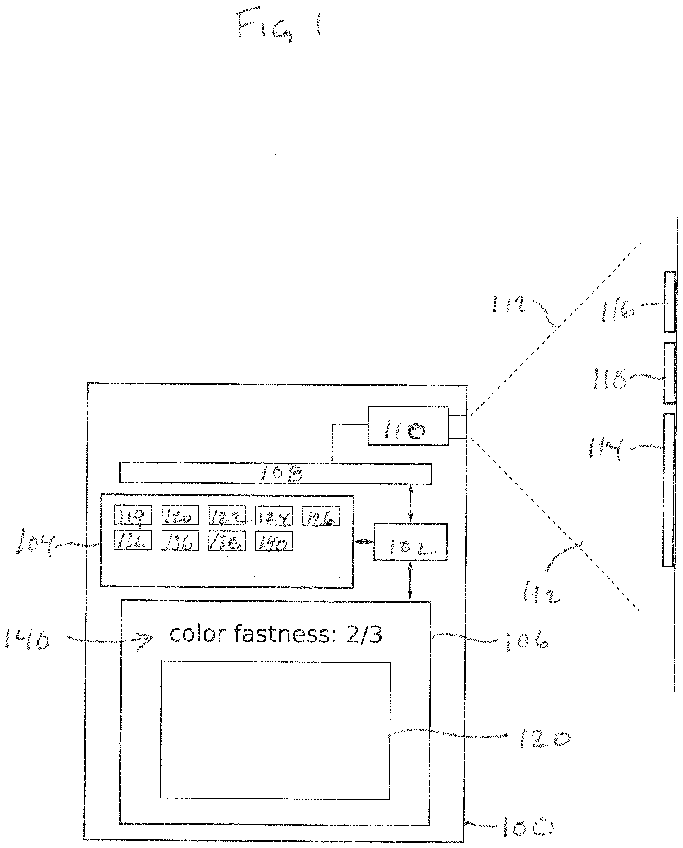

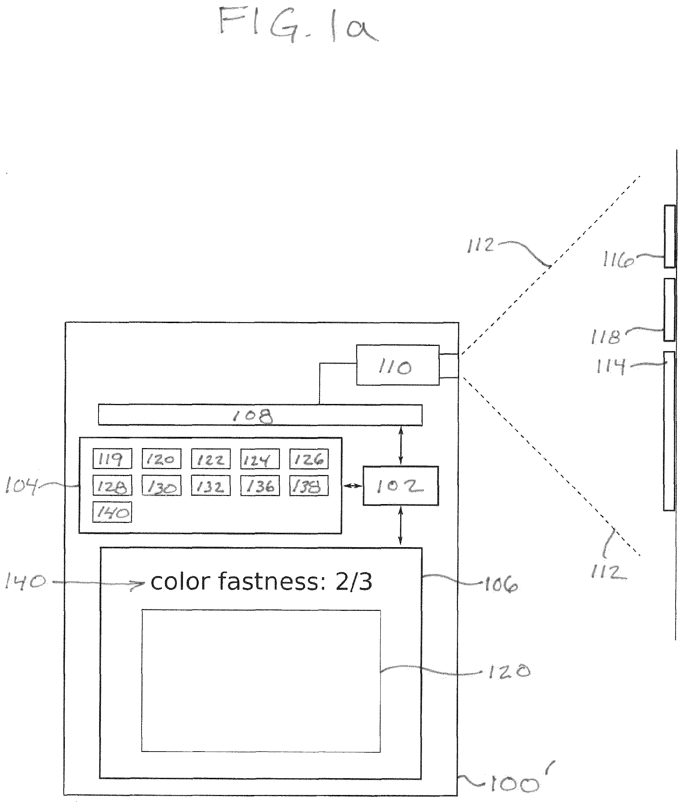

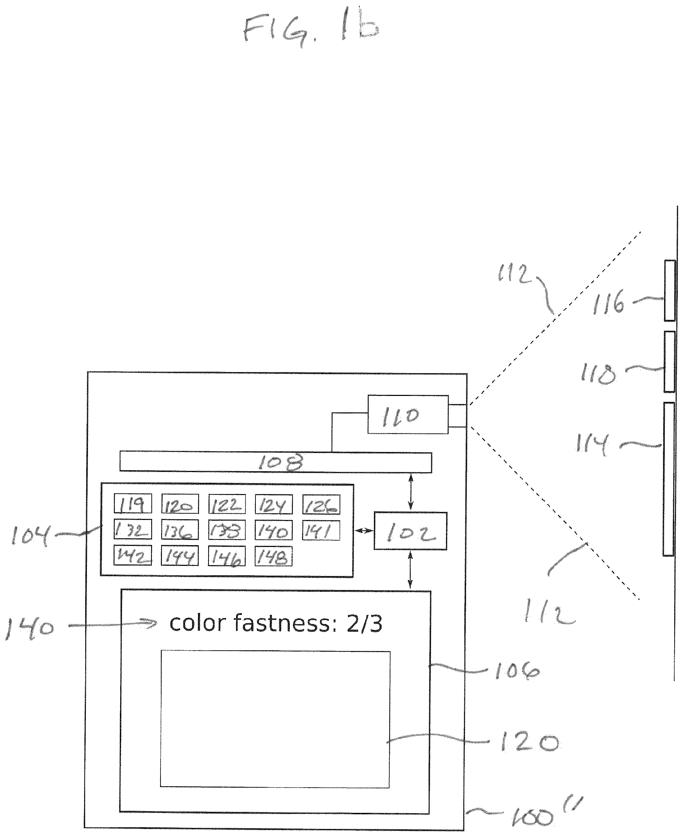

Fig. 1 illustrates an example of a portable computing device 100. The portable computing device 100 is shown as comprising a computational system 102 that is in communication with a memory 104, a user interface or display 106, and a hardware interface 108. The hardware interface 108 enables the computational system 102 to control the operation and function of various components of the portable computing device 100. The computational system is in communication with a camera 110 via the hardware interface 108. The camera 110 has a field of view 112, which is shown as imaging a color chart 114 as well as a fabric reference 116 and a fabric sample 118. The fabric reference 116 and the fabric sample 118 have been prepared according to a protocol or procedure for measuring color fastness of the fabric.

The memory 104 is shown as containing machine-executable instructions 119. The machine-executable instructions 119 enable the computational system 102 to perform various control and imaging tasks. Execution of the machine-executable instructions 119 causes the computational system 102 to control the camera system to acquire a digital image 120 of the field of view of the camera 110 which is then stored in the memory 104. The memory 104 is further shown as containing a location of a reference region 122. This corresponds to the location of the fabric reference 116. The memory 104 is further shown as containing a location of a sample region 124. This corresponds to the location of the fabric sample 118 in the digital image 120.

The memory 104 is further shown as containing a location of a color reference region 126. This corresponds to the location of a color chart 114 in the digital image 120. The memory 104 is further shown as containing reference color distances 136 assigned to each of multiple color fastness values 132.

The memory 104 is further shown as containing a pixel wise color fastness value 138 for pixels in the sample region 124 that were calculated by comparing the reference color distance 136 of each of the multiple color fastness value to the pixel wise sample color distance 134. The memory 104 is further shown as containing a color fastness value 140 that was selected using the pixel wise color fastness values 138.

The user interface and/or display 106 is further shown as containing a rendering of the color fastness value 140 as well as the digital image 120.

Fig. 1a illustrates a further example of a portable computing device 100' that is similar to that illustrated in Fig. 1. In the example illustrated in Fig. 1a, the color reference region comprises at least one reference color region 130 and multiple graded color regions 128. The color reference region in this example is a grey scale or blue scale which could be used for a color fastness test.

The memory 104 is shown as containing a location of a color fastness reference region 126. This corresponds to the location of the color chart 114 in the digital image 120. The memory 104 is further shown as containing the location of graded color regions 128 and the location of original color regions 130 within the multiple color reference regions 126. The memory 104 is further shown as containing color fastness values 132 that are assigned to the various locations of the graded color regions 128. The memory 104 is further shown as containing pixel wise sample color distance 134 between pixels in the sample region 124 and a reference color of the reference region 122. The memory 104 is further shown as containing reference color distances 136 that were calculated by differences between the graded color regions 128 and the original color region or regions 130.

The memory 104 is shown as containing a pixel wise color fastness value 138 for pixels in the sample region 124 that were calculated by comparing the pixel wise sample color distance 134 to the reference color distances 136. The memory 104 is further shown as containing a color fastness value 140 that was selected using the pixel wise color fastness values 138.

Fig. 1b illustrates a further example of a portable computing device 100" that is similar to the example illustrated in Fig. 1. In this example, the calibration of the calculation of the pixel wise color fastness value is performed by transforming the digital image to a chosen color space. The digital image 120 contains multiple predefined color regions 141. The memory additionally stores a location 142 of the multiple predefined color regions. The memory further contains a measured color value 144 for each of the predefined color regions 141 determined from the digital image 120. The memory also contains predetermined color values 148 for each of the predefined color regions.

The memory further contains a color transformation algorithm configured to transform the digital image 120 into a digital image 120' in a chosen color space. The color transformation algorithm uses the pairs of predetermined color values 148 and the measured color values 144 for each of the predefined color regions 141 to do this.

The pixel wise color fastness value 138 is then determined using the transformed digital image 120'. The reference color distance 134 is known because the change or delta in the grey values or blue values used for the color scale are defined in the chosen color space.

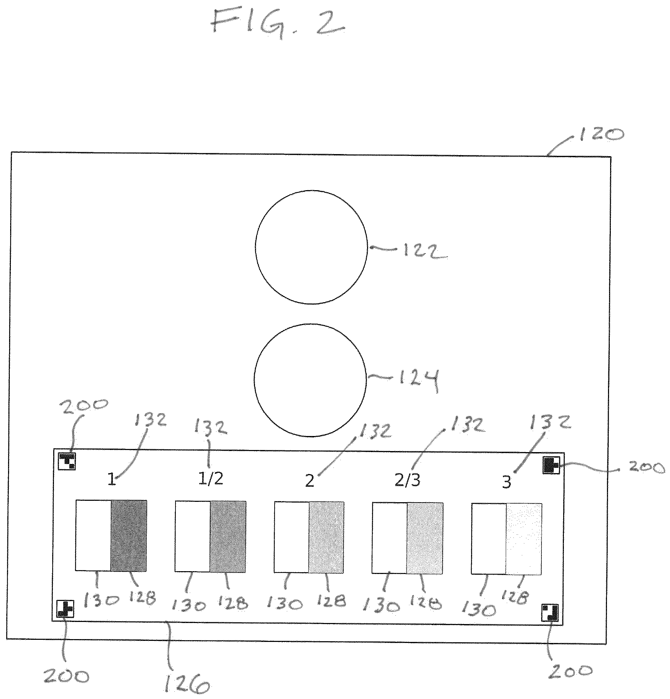

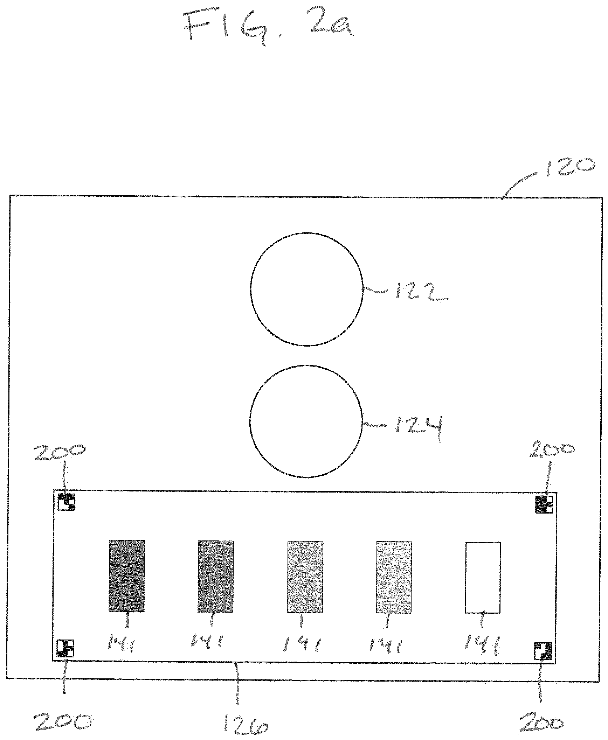

Fig. 2 shows an exemplary view of a digital image 120 as would be used for the example illustrated in Fig. 1a. In the digital image 120 the location of the reference region 122 and the location of the sample region 124 are visible. An image of the color chart 114 is indicated by the location of the multiple color reference regions 126. Within this region 126 are pairs of graded color regions 128 and original color regions 130. Above each of the pairs of graded color regions 128 and original color regions 130 are color fastness values 132. Also visible are optional optical markings 200 which are optionally used to identify the location of the various original color regions 130 and graded color regions 128 within the multiple color reference regions 126.

Fig. 2a shows an exemplary view of a digital image 120 as would be used for the example illustrated in Fig. 1b. In the digital image 120 the location of the reference region 122 and the location of the sample region 124 are also visible. An image of the color chart 114 is visible. Within this region 126 are multiple predefined color regions 141. Also visible are optional optical markings 200 which are optionally used to identify the location of the predefined color regions 141.

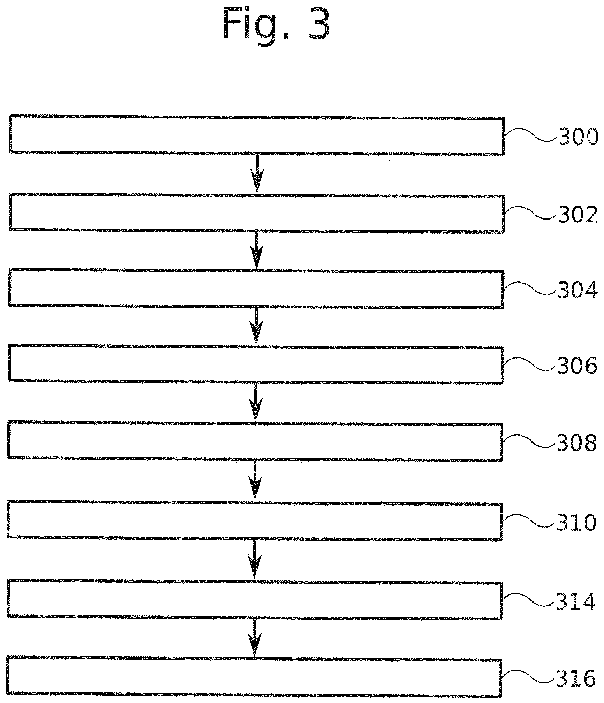

Fig. 3 shows a flowchart which illustrates a method of operating the portable computing device 100 of Fig. 1. First, in step 300, the computational system 102 controls the camera 110 to acquire the digital image 120. Next, in step 302, the reference region 122 is identified in the digital image 120. Next, in step 304, the location of the sample region 124 is identified in the digital image 120. Then, in step 306, a color reference region 126 is identified in the digital image 120. This for example may be done using optional optical markings 200 or may be done using an algorithm or neural network.

Next, in step 308, a reference color distance for each of multiple the color fastness values 140 is received. Next, in step 310, a pixel wise sample color distance 134 is calculated between a sample color value of individual pixels in the sample region 124 and a reference color of the reference region 122. Next, in step 314, a pixel wise color fastness value 138 is calculated by comparing the reference color distances 136 of each of the multiple color fastness values to the pixel wise sample color distance 134. Finally, in step 316, a color fastness value 140 is selected for the sample region 124 using the pixel wise color fastness values 138.

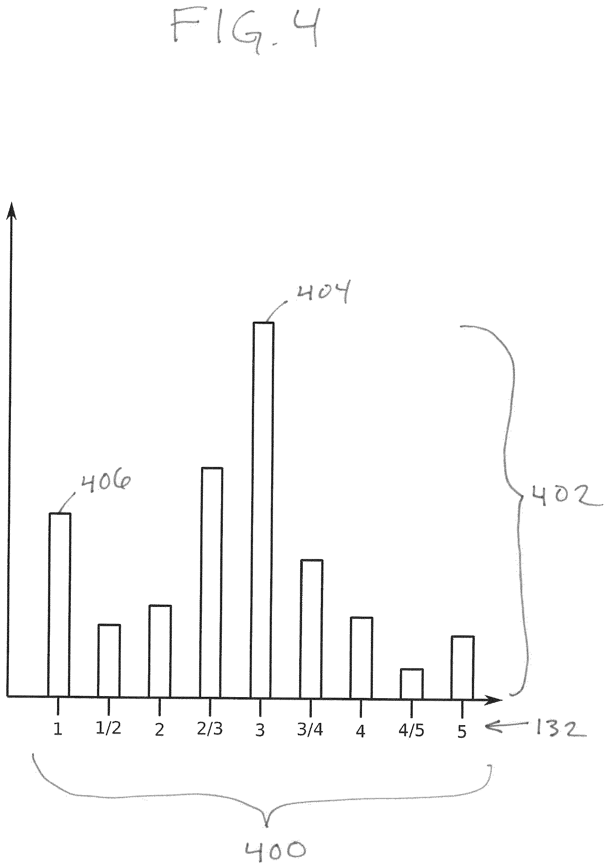

Fig. 4 shows an example of a value histogram 400 that was constructed using the pixel wise color fastness values 138. The histogram 400 comprises bins 402 for each of the color fastness values 132. In the histogram it can be seen that there are some values which can be ignored 406 and then the histogram 400 can be looked at in different ways to determine the color fastness value 140. For example, the bin with the maximum 404 may be taken in one example and various averages or mean values may also be calculated.

Although in the example shown in Fig. 4 is for a value histogram for the pixel wise color fastness value 130. A value histogram could also be constructed for the pixel wise sample color distances.

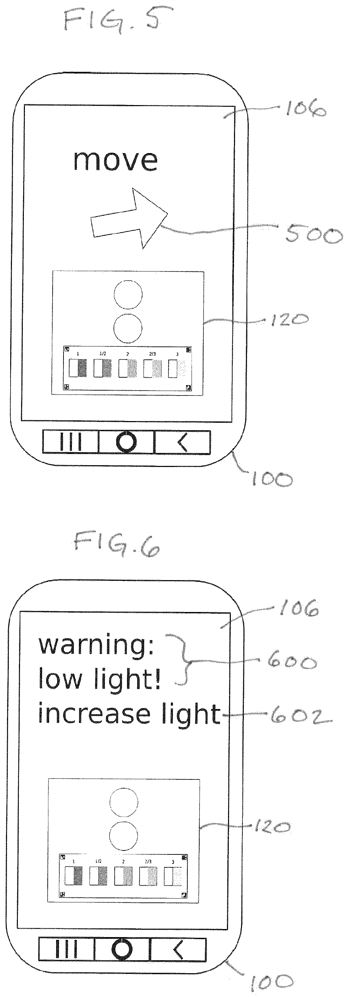

Fig. 5 illustrates one example of the user interface or display 106. The display contains a view of the current digital image 120 as well as a repositioning indicator 500 which tells the operator how to move the portable computing device to improve the quality of the color fastness value 140. In this case, there is an arrow showing which direction the portable computing device or the field of view of the camera should be moved.

Fig. 6 shows a further view of the user interface or display 106. Again, the digital image 120 is shown. In this case, an image quality warning 600 is displayed. In this case the system detected that there was insufficient light to perform an accurate measurement of the color fastness value 140. There are additional instructions 602 which tells the operator what to do to correct the situation.

### List of Reference Numerals

- 100: portable computing device
- 102: computational system
- 104: memory
- 106: user interface / display
- 108: hardware interface
- 110: camera
- 112: field of view
- 114: color chart
- 116: fabric reference
- 118: fabric sample
- 119: machine executable instructions
- 120: digital image
- 122: location of reference region
- 124: location of sample region
- 126: location of color reference region
- 128: location of graded color region
- 130: location of original color region
- 132: color fastness values
- 134: pixel wise sample color distance
- 136: reference color distances
- 138: pixel wise color fastness values
- 140: color fastness value
- 141: multiple predefined color regions
- 142: location of multiple predefined color regions
- 144: measured color values
- 146: transformed digital image
- 148: predetermined color values200 optical markings
- 300: control the camera to acquire the digital image
- 302: identify a reference region within the digital image
- 304: identify a sample region within the digital image
- 306: identify a color reference region in the digital image
- 308: receive a reference color distance for each of multiple color fastness value to each of the multiple graded color regions
- 310: calculate a pixel wise sample color distance between a sample color value of individual pixels in the sample region and a reference color of the reference region
- 314: calculate a pixel wise color fastness value of the individual pixels in the sample region by comparing the reference color distance of each of the multiple color fastness values to the pixel wise sample color distance
- 316: select a color fastness value for the sample region using the pixel wise color fastness value of the individual pixels in the sample region
- 400: value histogram
- 402: bins
- 404: maximum value
- 406: values to ignore
- 500: repositioning indicator
- 600: image quality warning
- 602: instructions

## Claims

1. A portable computing device (100) comprising:
- a memory (104) storing machine executable instructions (119);
- a camera (110) configured for acquiring a digital image (120);
- a computational system (102), wherein execution of the machine executable instructions causes the computational system to:
- control (300) the camera to acquire the digital image;
- identify (302) a reference region (122) within the digital image;
- identify (304) a sample region (124) within the digital image;
- identify (306) a color reference region (126) in the digital image;
- receive (308) a reference color distance (136) for each of multiple color fastness values (140);
- calculate (310) a pixel wise sample color distance (134) between a sample color value of individual pixels in the sample region and a reference color of the reference region;
- calculate (314) a pixel wise color fastness value (138) of the individual pixels in the sample region by comparing the reference color distance of each of the multiple color fastness values to the pixel wise sample color distance, wherein the calculation of the pixel wise color fastness value is calibrated using a color measurement of the color reference region; and
- select (316) a color fastness value (140) for the sample region using the pixel wise color fastness value of the individual pixels in the sample region;
wherein execution of the machine executable instructions further causes the computational system to perform any one of the following:
- construct a value histogram (400) from the pixel wise color fastness value of the individual pixels in the sample region, wherein the color fastness value for the sample region is selected by determining a characteristic value (404) of the value histogram and
- construct a value histogram from the pixel wise sample color distances, wherein a combined pixel wise sample color distance is calculated by determining a characteristic value of the value histogram, wherein the color fastness value for the sample region is calculated using the combined pixel wise color fastness value.

2. The portable computing device of claim 1, wherein the characteristic value of the color fastness value histogram is determined using any one of the following:
- by determining a maximum value (404) of the value histogram;
- by determining an average value of the value histogram;
- by determining a median value of the value histogram;
- by fitting a curve function to the value histogram, wherein the characteristic value is a fitting parameter or a maximum value of the curve function;
- by cropping the value histogram according to a predetermined criterion and then determining the maximum value of the value histogram, the average value of the value histogram, the median value of the value histogram, of fitting the curve function to the value histogram.

3. The portable computing device of any one of the preceding claims, wherein the pixel wise color fastness value is calculated by performing any one of the following:
- by finding the reference color distance that is closest in value to the pixel wise sample color distance; and
- calculating the pixel wise color fastness value as a continuous number.

4. The portable computing device of any one of the preceding claims, wherein saturated pixels are excluded from calculation of the pixel wise sample color distance, the pixel wise color fastness value, the reference color distance, and/or the reference color value.

5. The portable computing device of any one of the preceding claims, wherein the digital image is gamma corrected, wherein execution of the machine executable instructions further causes the computational system to reverse the gamma correction before beginning calculation of the sample color distance and the reference color distance.

6. The portable computing device of any one of the preceding claims, wherein the memory further comprises an optical marking identification module configured for recognizing and locating optical markings (200) within the digital image, wherein execution of the machine executable instructions further causes the computational system to perform any one of the following:
- identify the reference region within the digital image by locating optical markings in the digital image using the optical marking identification module;
- identify the sample region within the digital image by locating the optical markings using the optical marking identification module;
- identify the color fastness region within the digital image by locating the optical markings using the optical marking identification module;
- determine a sample identifier, wherein the sample identifier is preferably appended to the color fastness value; and
- combinations thereof.

7. The portable computing device of any one of the preceding claims, wherein the memory further contains an object detection algorithm configured to output the reference region, the sample region, the at least one original color region, and each of the multiple graded color regions in response to receiving the digital image, wherein execution of the machine executable instructions further causes the computational system to receive the reference region, the sample region, the at least one original color region, and each of the multiple graded color regions from the object detection algorithm in response to inputting the digital image into the object detection algorithm, wherein optionally execution of the machine executable instructions further causes the computational system to:
- determine a size and/or viewing angle of any one of the following: the reference region, the sample region, the at least one original color region, and each of the multiple graded color regions; and
- display a repositioning indicator (500) on the display if the size and/or viewing angle is not within a predetermined positioning range.

8. The portable computing device of any one of the preceding claims, wherein execution of the machine executable instructions further causes the computational system to:
- control the camera to reacquire the digital image multiple times; and
- determine the color fastness value multiple times after reacquiring the digital image; and
- calculate a statistical color fastness value calculated from the color fastness value determined multiple times.

9. The portable computing device of any one of the preceding claims, wherein any one of the following:
- the portable computing device further comprises a display, wherein execution of the machine executable instructions further causes the computational system to display the color fastness value;
- execution of the machine executable instructions further causes the computational system to store the color fastness value in the memory; and
- execution of the machine executable instructions further causes the computational system to store the color fastness value in database via a network connection.

10. The portable computing device of any one of the preceding claims, wherein execution of the machine executable instructions further causes the computational system to:
- determine an image quality measure of the digital image; and
- display an image quality warning message (600) on the display if the image quality measure is outside of a predetermined image quality measure range and/or suspend determination of the color fastness value.

11. The portable computing device of any one of the preceding claims, wherein the color reference region comprises at least one original color region (130) and multiple graded color regions (128),
wherein receiving the reference color distance for each of the multiple color fastness values using the measurement of the color reference region comprises:
- calculating a measured color distance between each of the multiple graded color regions and the at lease one original color region; and
- assigning the measured color distance of each of the multiple graded color regions to one of the multiple color fastness values to calibrate the calculation of the pixel wise color fastness value.

12. The portable computing device of any one of claims 1 through 10, wherein the color refence region comprises multiple predefined color regions each with a predetermined color value in a chosen color space, wherein calibration of the pixel wise color fastness value comprises:
- determining a measured color value in the chosen color space for each of the multiple predefined color regions;
- transforming the digital image to the chosen color space using a difference between the predetermined color value and the measured color value of each of the multiple predefined color regions, wherein the transformation of the digital image to the chosen color space calibrates the calculation of the pixel wise color fastness value, wherein the reference color distance of each of the multiple color fastness values is predefined in the chosen color space
wherein optionally the multiple predefined color regions are any one of the following: a grey scale or a polychromatic distribution of colors.

13. A method of determining a color fastness value (140), wherein the method comprises:
- controlling (300) a camera (110) to acquire a digital image (120);
- identifying (302) a reference region (122) within the digital image;
- identifying (304) a sample region (124) within the digital image;
- identifying (306) a color reference region (126) in the digital image;
- receive (308) a reference color distance (136) for each of multiple color fastness values (140);
- calculating (310) a pixel wise sample color distance (134) between a sample color value of individual pixels in the sample region and a reference color of the reference region;
- calculating (314) a pixel wise color fastness value (138) of the individual pixels in the sample region by comparing the reference color distance of each of the multiple color fastness values to the pixel wise sample color distance, wherein the calculation of the pixel wise color fastness value is calibrated using a color measurement of the color reference region; and
- selecting (316) a color fastness value (140) for the sample region using the pixel wise color fastness value of the individual pixels in the sample region.
wherein the method further comprises any one of the following:
- constructing a value histogram (400) from the pixel wise color fastness value of the individual pixels in the sample region, wherein the color fastness value for the sample region is selected by determining a characteristic value (404) of the value histogram and
- constructing a value histogram from the pixel wise sample color distances,
wherein a combined pixel wise sample color distance is calculated by determining a characteristic value of the value histogram, wherein the color fastness value for the sample region is calculated using the combined pixel wise color fastness value.

14. A computer program comprising machine executable instructions (119) for execution by computational system (102) controlling a portable computing device (100), wherein the portable computing device comprises a camera (110) configured for acquiring a digital image (120), wherein execution of the machine executable instructions causes the computational system to:
- control (300) the camera to acquire the digital image;
- identify (302) a reference region (122) within the digital image;
- identify (304) a sample region (124) within the digital image;
- identify (306) a color reference region (126) in the digital image;
- receive (308) a reference color distance (136) for each of multiple color fastness values (140);
- calculate (310) a pixel wise sample color distance (134) between a sample color value of individual pixels in the sample region and a reference color of the reference region;
- calculate (314) a pixel wise color fastness value (138) of the individual pixels in the sample region by comparing the reference color distance of each of the multiple color fastness values to the pixel wise sample color distance, wherein the calculation of the pixel wise color fastness value is calibrated using a color measurement of the color reference region; and
- select (316) a color fastness value (140) for the sample region by using the pixel wise color fastness value of the individual pixels in the sample region;
wherein execution of the machine executable instructions further causes the computational system to perform any one of the following:
- construct a value histogram (400) from the pixel wise color fastness value of the individual pixels in the sample region, wherein the color fastness value for the sample region is selected by determining a characteristic value (404) of the value histogram and
- construct a value histogram from the pixel wise sample color distances, wherein a combined pixel wise sample color distance is calculated by determining a characteristic value of the value histogram, wherein the color fastness value for the sample region is calculated using the combined pixel wise color fastness value.

## Patentansprüche

1. Tragbare Rechenvorrichtung (100) umfassend:
- einen Speicher (104), der von einer Maschine ausführbare Befehle (119) speichert;
- eine Kamera (110), die zum Aufnehmen eines digitalen Bilds (120) konfiguriert ist;
- ein Rechensystem (102), wobei die Ausführung der von einer Maschine ausführbaren Befehle das Rechensystem zu Folgendem veranlasst:
- Steuern (300) der Kamera, um das digitale Bild aufzunehmen;
- Kennzeichnen (302) eines Referenzbereichs (122) innerhalb des digitalen Bilds;
- Kennzeichnen (304) eines Probenbereichs (124) innerhalb des digitalen Bilds;
- Kennzeichnen (306) eines Farbreferenzbereichs (126) in dem digitalen Bild;
- Erhalten (308) einer Referenzfarbdistanz (136) für jeden von mehreren Farbechtheitswerten (140);
- Berechnen (310) einer pixelweisen Probenfarbdistanz (134) zwischen einem Probenfarbwert von einzelnen Pixeln in Probenbereich und einer Referenzfarbe des Referenzbereichs;
- Berechnen (314) eines pixelweisen Farbechtheitswerts (138) der einzelnen Pixel in dem Probenbereich durch Vergleichen der Referenzfarbdistanz jedes der mehreren Farbechtheitswerte mit der pixelweisen Probenfarbdistanz, wobei die Berechnung des pixelweisen Farbechtheitswerts unter Verwendung einer Farbmessung des Farbreferenzbereichs kalibriert wird; und
- Auswählen (316) eines Farbechtheitswerts (140) für den Probenbereich unter Verwendung des pixelweisen Farbechtheitswerts der einzelnen Pixel in dem Probenbereich;
wobei die Ausführung der von einer Maschine ausführbaren Befehle ferner das Rechensystem veranlasst, einen der folgenden Vorgänge durchzuführen:
- Konstruieren eines Wertehistogramms (400) anhand des pixelweisen Farbechtheitswerts der einzelnen Pixel in dem Probenbereich, wobei der Farbechtheitswert für den Probenbereich durch Bestimmen eines charakteristischen Werts (404) des Wertehistogramms ausgewählt wird, und
- Konstruieren eines Wertehistogramms anhand der pixelweisen Probenfarbdistanzen, wobei eine kombinierte pixelweise Probenfarbdistanz durch Bestimmen eines charakteristischen Werts des Wertehistogramms berechnet wird, wobei der Farbechtheitswert für den Probenbereich unter Verwendung des kombinierten pixelweisen Farbechtheitswerts berechnet wird.

2. Tragbare Rechenvorrichtung nach Anspruch 1, wobei der charakteristische Wert des Farbechtheitswertehistogramms unter Verwendung von einem der folgenden Vorgänge bestimmt wird:
- durch Bestimmen eines maximalen Werts (404) des Wertehistogramms;
- durch Bestimmen eines durchschnittlichen Werts des Wertehistogramms;
- durch Bestimmen eines Mittelwerts des Wertehistogramms;
- durch Anpassen einer Kurvenfunktion an das Wertehistogramm, wobei der charakteristische Wert ein Anpassungsparameter oder ein maximaler Wert der Kurvenfunktion ist;
- durch Zuschneiden des Wertehistogramms gemäß einem vorgegebenen Kriterium und dann Bestimmen des maximalen Werts des Wertehistogramms, des durchschnittlichen Werts des Wertehistogramms, des mittleren Werts des Wertehistogramms, oder Anpassen der Kurvenfunktion an das Wertehistogramm.

3. Tragbare Rechenvorrichtung nach einem der vorherigen Ansprüche, wobei der pixelweise Farbechtheitswert durch Durchführen eines der folgenden Vorgänge berechnet wird:
- durch Finden der Referenzfarbdistanz, die hinsichtlich des Werts am nächsten bei der pixelweisen Probenfarbdistanz liegt; und
- Berechnen des pixelweisen Farbechtheitswerts als eine fortlaufende Zahl.

4. Tragbare Rechenvorrichtung nach einem der vorherigen Ansprüche, wobei gesättigte Pixel aus der Berechnung der pixelweisen Probenfarbdistanz, des pixelweisen Farbechtheitswerts, der Referenzfarbdistanz und/oder des Referenzfarbwerts ausgeschlossen sind.

5. Tragbare Rechenvorrichtung nach einem der vorherigen Ansprüche, wobei das digitale Bild gammakorrigiert ist, wobei die Ausführung der von einer Maschine ausführbaren Befehle ferner das Rechensystem veranlasst, die Gammakorrektur vor dem Beginnen der Berechnung der Probenfarbdistanz und der Referenzfarbdistanz umzukehren.

6. Tragbare Rechenvorrichtung nach einem der vorherigen Ansprüche, wobei der Speicher ferner ein optisches Markierungskennzeichnungsmodul umfasst, das zum Erkennen und Lokalisieren von optischen Markierungen (200) innerhalb des digitalen Bilds konfiguriert ist, wobei die Ausführung der von einer Maschine ausführbaren Befehle ferner das Rechensystem veranlasst, einen der folgenden Vorgänge durchzuführen:
- Kennzeichnen des Referenzbereichs innerhalb des digitalen Bilds durch Lokalisieren von optischen Markierungen in dem digitalen Bild unter Verwendung des optischen Markierungskennzeichnungsmoduls;
- Kennzeichnen des Probenbereichs innerhalb des digitalen Bilds durch Lokalisieren der optischen Markierungen unter Verwendung des optischen Markierungskennzeichnungsmoduls;
- Kennzeichnen des Farbechtheitsbereichs innerhalb des digitalen Bilds durch Lokalisieren der optischen Markierungen unter Verwendung des optischen Markierungskennzeichnungsmoduls;
- Bestimmen einer Probenkennung, wobei die Probenkennung vorzugsweise an den Farbechtheitswert angehängt ist; und
- Kombinationen davon.

7. Tragbare Rechenvorrichtung nach einem der vorherigen Ansprüche, wobei der Speicher ferner einen Objekterkennungsalgorithmus enthält, der konfiguriert ist, um den Referenzbereich, den Probenbereich, den mindestens einen ursprünglichen Farbbereich und jeden der mehreren abgestuften Farbbereiche als Reaktion auf den Erhalt des digitalen Bilds auszugeben, wobei die Ausführung der von einer Maschine ausführbaren Befehle ferner das Rechensystem veranlasst, den Referenzbereich, den Probenbereich, den mindestens einen ursprünglichen Farbbereich und jeden der mehreren abgestuften Farbbereiche von dem Objekterkennungsalgorithmus als Reaktion auf das Eingeben des digitalen Bilds in den Objekterkennungsalgorithmus zu erhalten, wobei optional das Ausführen der von einer Maschine ausführbaren Befehle ferner das Rechensystem zu Folgendem veranlasst:
- Bestimmen einer Größe und/oder eines Blickwinkels eines oder mehrerer der folgenden: des Referenzbereichs, des Probenbereichs, des mindestens einen ursprünglichen Farbbereichs und jedes der mehreren abgestuften Farbbereiche; und
- Anzeigen eines Neupositionierungsindikators (500) auf dem Display, wenn die Größe und/oder der Blickwinkel nicht innerhalb eines vorgegebenen Positionierungsbereichs liegt.

8. Tragbare Rechenvorrichtung nach einem der vorherigen Ansprüche, wobei die Ausführung der von einer Maschine ausführbaren Befehle ferner das Rechensystem zu Folgendem veranlasst:
- Steuern der Kamera, um das digitale Bild mehrmals neu aufzunehmen; und
- mehrmaliges Bestimmen des Farbechtheitswerts nach dem erneuten Aufnehmen des digitalen Bilds; und
- Berechnen eines statistischen Farbechtheitswerts, der anhand des mehrmals bestimmten Farbechtheitswerts berechnet wird.

9. Tragbare Rechenvorrichtung nach einem der vorherigen Ansprüche, wobei Folgendes gilt:
- die tragbare Rechenvorrichtung umfasst ferner ein Display, wobei die Ausführung der von einer Maschine ausführbaren Befehle ferner das Rechensystem veranlasst, den Farbechtheitswert anzuzeigen; und/oder
- die Ausführung der von einer Maschine ausführbaren Befehle veranlasst das Rechensystem ferner, den Farbechtheitswert in dem Speicher zu speichern; und/oder
- die Ausführung der von einer Maschine ausführbaren Befehle veranlasst das Rechensystem ferner, den Farbechtheitswert in einer Datenbank über eine Netzwerkverbindung zu speichern.

10. Tragbare Rechenvorrichtung nach einem der vorherigen Ansprüche, wobei die Ausführung der von einer Maschine ausführbaren Befehle ferner das Rechensystem zu Folgendem veranlasst:
- Bestimmen eines Bildqualitätsmaßes des digitalen Bilds; und
- Anzeigen einer Bildqualitätswarnungsnachricht (600) auf dem Display, wenn das Bildqualitätsmaß außerhalb eines vorgegebenen Bildqualitätsmaßbereichs liegt, und/oder Aussetzen der Bestimmung des Farbechtheitswerts.

11. Tragbare Rechenvorrichtung nach einem der vorherigen Ansprüche, wobei der Farbreferenzbereich mindestens einen ursprünglichen Farbbereich (130) und mehrere abgestufte Farbbereiche (128) umfasst,
wobei das Erhalten der Referenzfarbdistanz für jeden der mehreren Farbechtheitswerte unter Verwendung der Messung des Farbreferenzbereichs Folgendes umfasst:
- Berechnen einer gemessenen Farbdistanz zwischen jedem der mehreren abgestuften Farbbereiche und dem mindestens einen ursprünglichen Farbbereich; und
- Zuordnen der gemessenen Farbdistanz jedes der mehreren abgestuften Farbbereiche zu einem der mehreren Farbechtheitswerte, um die Berechnung des pixelweisen Farbechtheitswerts zu kalibrieren.

12. Tragbare Rechenvorrichtung nach einem der Ansprüche 1 bis 10, wobei der Farbreferenzbereich mehrere vorab definierte Farbbereiche umfasst, die jeweils einen vorgegebenen Farbwert in einem gewählten Farbraum aufweisen, wobei die Kalibrierung des pixelweisen Farbechtheitswerts Folgendes umfasst:
- Bestimmen eines gemessenen Farbwerts in dem gewählten Farbraum für jeden der mehreren vorab definierten Farbbereiche;
- Umwandeln des digitalen Bilds in den gewählten Farbraum unter Verwendung einer Differenz zwischen dem vorgegebenen Farbwert und dem gemessenen Farbwert jedes der mehreren vorab definierten Farbbereiche, wobei die Umwandlung des digitalen Bilds in den gewählten Farbraum die Berechnung des pixelweisen Farbechtheitswerts kalibriert, wobei die Referenzfarbdistanz jedes der mehreren Farbechtheitswerte vorab in dem gewählten Farbraum definiert wird;
wobei optional die mehreren vorab definierten Farbbereiche Folgendes sind: eine Graustufe und/oder eine mehrfarbige Verteilung von Farben.

13. Verfahren zum Bestimmen eines Farbechtheitswerts (140), wobei das Verfahren Folgendes umfasst:
- Steuern (300) einer Kamera (110), um ein digitales Bild (120) aufzunehmen;
- Kennzeichnen (302) eines Referenzbereichs (122) innerhalb des digitalen Bilds;
- Kennzeichnen (304) eines Probenbereichs (124) innerhalb des digitalen Bilds;
- Kennzeichnen (306) eines Farbreferenzbereichs (126) in dem digitalen Bild;
- Erhalten (308) einer Referenzfarbdistanz (136) für jeden von mehreren Farbechtheitswerten (140);
- Berechnen (310) einer pixelweisen Probenfarbdistanz (134) zwischen einem Probenfarbwert einzelner Pixel in dem Probenbereich und einer Referenzfarbe des Referenzbereichs;
- Berechnen (314) eines pixelweisen Farbechtheitswerts (138) der einzelnen Pixel in dem Probenbereich durch Vergleichen der Referenzfarbdistanz jedes der mehreren Farbechtheitswerte mit der pixelweisen Probenfarbdistanz, wobei die Berechnung des pixelweisen Farbechtheitswerts unter Verwendung einer Farbmessung des Farbreferenzbereichs kalibriert wird; und
- Auswählen (316) eines Farbechtheitswerts (140) für den Probenbereich unter Verwendung des pixelweisen Farbechtheitswerts der einzelnen Pixel in dem Probenbereich;
wobei das Verfahren ferner einen der folgenden Vorgänge umfasst:
- Konstruieren eines Wertehistogramms (400) anhand des pixelweisen Farbechtheitswerts der einzelnen Pixel in dem Probenbereich, wobei der Farbechtheitswert für den Probenbereich durch Bestimmen eines charakteristischen Werts (404) des Wertehistogramms ausgewählt wird, und
- Konstruieren eines Wertehistogramms anhand der pixelweisen Probenfarbdistanzen, wobei eine kombinierte pixelweise Probenfarbdistanz durch Bestimmen eines charakteristischen Werts des Wertehistogramms berechnet wird, wobei der Farbechtheitswert für den Probenbereich unter Verwendung des kombinierten pixelweisen Farbechtheitswerts berechnet wird.

14. Computerprogramm, das von einer Maschine ausführbare Befehle (119) zur Ausführung durch ein Rechensystem (102) umfasst, das eine tragbare Rechenvorrichtung (100) steuert, wobei die tragbare Rechenvorrichtung eine Kamera (110) umfasst, die zum Aufnehmen eines digitalen Bilds (120) konfiguriert ist, wobei die Ausführung der von einer Maschine ausführbaren Befehle das Rechensystem zu Folgendem veranlasst:
- Steuern (300) der Kamera, um das digitale Bild aufzunehmen;
- Kennzeichnen (302) eines Referenzbereichs (122) innerhalb des digitalen Bilds;
- Kennzeichnen (304) eines Probenbereichs (124) innerhalb des digitalen Bilds;
- Kennzeichnen (306) eines Farbreferenzbereichs (126) in dem digitalen Bild;
- Erhalten (308) einer Referenzfarbdistanz (136) für jeden von mehreren Farbechtheitswerten (140);
- Berechnen (310) einer pixelweisen Probenfarbdistanz (134) zwischen einem Probenfarbwert einzelner Pixel in dem Probenbereich und einer Referenzfarbe des Referenzbereichs;
- Berechnen (314) eines pixelweisen Farbechtheitswerts (138) der einzelnen Pixel in dem Probenbereich durch Vergleichen der Referenzfarbdistanz jedes der mehreren Farbechtheitswerte mit der pixelweisen Probenfarbdistanz, wobei die Berechnung des pixelweisen Farbechtheitswerts unter Verwendung einer Farbmessung des Farbreferenzbereichs kalibriert wird; und
- Auswählen (316) eines Farbechtheitswerts (140) für den Probenbereich durch Verwenden des pixelweisen Farbechtheitswerts der einzelnen Pixel in dem Probenbereich;
wobei die Ausführung der von einer Maschine ausführbaren Befehle ferner das Rechensystem veranlasst, einen der folgenden Vorgänge durchzuführen:
- Konstruieren eines Wertehistogramms (400) anhand des pixelweisen Farbechtheitswerts der einzelnen Pixel in dem Probenbereich, wobei der Farbechtheitswert für den Probenbereich durch Bestimmen eines charakteristischen Werts (404) des Wertehistogramms ausgewählt wird, und
- Konstruieren eines Wertehistogramms anhand der pixelweisen Probenfarbdistanzen, wobei eine kombinierte pixelweise Probenfarbdistanz durch Bestimmen eines charakteristischen Werts des Wertehistogramms berechnet wird, wobei der Farbechtheitswert für den Probenbereich unter Verwendung des kombinierten pixelweisen Farbechtheitswerts berechnet wird.

## Revendications

1. Dispositif informatique portatif (100) comprenant :
- une mémoire (104) mémorisant des instructions exécutables par machine (119) ;
- une caméra (110) configurée pour acquérir une image numérique (120) ;
- un système informatique (102), dans lequel l'exécution des instructions exécutables par machine amène le système informatique à :
- commander (300) la caméra pour acquérir l'image numérique ;
- identifier (302) une région de référence (122) dans l'image numérique ;
- identifier (304) une région d'échantillon (124) dans l'image numérique ;
- identifier (306) une région de référence de couleur (126) dans l'image numérique ;
- recevoir (308) une distance de couleur de référence (136) pour chacune des multiples valeurs de tenue des couleurs (140) ;
- calculer (310) une distance de couleur d'échantillon pixel par pixel (134) entre une valeur de couleur d'échantillon de pixels individuels dans la région d'échantillon et une couleur de référence de la région de référence ;
- calculer (314) une valeur de tenue des couleurs pixel par pixel (138) des pixels individuels de la zone d'échantillon en comparant la distance de couleur de référence de chacune des multiples valeurs de tenue des couleurs à la distance de couleur de l'échantillon pixel par pixel, dans lequel le calcul de la valeur de tenue des couleurs pixel par pixel est étalonné en utilisant une mesure de couleur de la zone de référence ; et
- sélectionner (316) une valeur de tenue des couleurs (140) pour la zone d'échantillon en utilisant la valeur de tenue des couleurs pixel par pixel des pixels individuels de la zone d'échantillon ;
dans lequel l'exécution des instructions exécutables par la machine amène en outre le système informatique à effectuer une quelconque des opérations suivantes :
- construire un histogramme de valeurs (400) à partir de la valeur de tenue des couleurs pixel par pixel de la zone d'échantillon, dans lequel la valeur de tenue des couleurs de la zone d'échantillon est sélectionnée en déterminant une valeur caractéristique (404) de l'histogramme de valeurs ;
- construire un histogramme de valeurs à partir des distances de couleurs pixel par pixel de l'échantillon, dans lequel une distance de couleurs pixel par pixel combinée est calculée en déterminant une valeur caractéristique de l'histogramme de valeurs, dans lequel la valeur de tenue des couleurs de la zone d'échantillon est calculée en utilisant la valeur de tenue des couleurs pixel par pixel combinée.

2. Dispositif informatique portatif selon la revendication 1, dans lequel la valeur caractéristique de l'histogramme de tenue des couleurs est déterminée selon une quelconque des méthodes suivantes :
- en déterminant une valeur maximale (404) de l'histogramme ;
- en déterminant une valeur moyenne de l'histogramme ;
- en déterminant une valeur médiane de l'histogramme ;
- en ajustant une fonction de courbe à l'histogramme, dans lequel la valeur caractéristique est un paramètre d'ajustement ou une valeur maximale de la fonction de courbe ;
- en recadrant l'histogramme selon un critère prédéterminé, puis en déterminant la valeur maximale, la valeur moyenne et la valeur médiane de l'histogramme ou en ajustant la fonction de courbe à l'histogramme.

3. Dispositif informatique portatif selon une quelconque des revendications précédentes, dans lequel la valeur de tenue des couleurs pixel par pixel est calculée en effectuant une des opérations suivantes :
- en trouvant la distance de couleur de référence la plus proche de la distance de couleur d'échantillon pixel par pixel ; et
- en calculant la valeur de tenue des couleurs pixel par pixel comme un nombre continu.

4. Dispositif informatique portatif selon une quelconque des revendications précédentes, dans lequel les pixels saturés sont exclus du calcul de la distance de couleur d'échantillon pixel par pixel, de la valeur de tenue de couleur pixel par pixel, de la distance de couleur de référence et/ou de la valeur de couleur de référence.

5. Dispositif informatique portatif selon une quelconque des revendications précédentes, dans lequel l'image numérique est corrigée gamma, dans lequel l'exécution des instructions exécutables par machine amène en outre le système informatique à inverser la correction gamma avant de commencer le calcul de la distance de couleur d'échantillon et de la distance de couleur de référence.

6. Dispositif informatique portatif selon une quelconque des revendications précédentes, dans lequel la mémoire comprend en outre un module d'identification de marquage optique configuré pour reconnaître et localiser les marquages optiques (200) dans l'image numérique, dans lequel l'exécution des instructions exécutables par machine amène le système informatique à effectuer une des opérations suivantes :
- identifier la zone de référence dans l'image numérique en localisant les marquages optiques en utilisant le module d'identification de marquage optique ;
- identifier la zone d'échantillon dans l'image numérique en localisant les marquages optiques en utilisant le module d'identification de marquage optique ;
- identifier la zone de tenue des couleurs dans l'image numérique en localisant les marquages optiques en utilisant le module d'identification de marquage optique ;
- déterminer un identifiant d'échantillon, dans lequel l'identifiant d'échantillon est de préférence ajouté à la valeur de tenue des couleurs ; et
- des combinaisons de ces éléments.

7. Dispositif informatique portatif selon une quelconque des revendications précédentes, dans lequel la mémoire contient en outre un algorithme de détection d'objets configuré pour délivrer en sortie la zone de référence, la zone d'échantillon, la au moins une zone de couleur d'origine et chacune des zones de couleur dégradées en réponse à la réception de l'image numérique, dans lequel l'exécution des instructions exécutables par machine amène en outre le système informatique à recevoir la zone de référence, la zone d'échantillon, la au moins une zone de couleur d'origine et chacune des zones de couleur dégradées de l'algorithme de détection d'objets en réponse à l'entrée de l'image numérique dans l'algorithme de détection d'objets, dans lequel l'exécution facultative des instructions exécutables par machine amène également le système informatique à :
- déterminer une taille et/ou un angle de vue d'un quelconque des éléments suivants : la zone de référence, la zone d'échantillon, la au moins une zone de couleur d'origine et chacune des zones de couleur dégradées ; et
- afficher un indicateur de repositionnement (500) sur l'écran si la taille et/ou l'angle de vue ne se situent pas dans une plage de positionnement prédéterminée.

8. Dispositif informatique portatif selon une quelconque des revendications précédentes, dans lequel l'exécution des instructions exécutables par la machine amène en outre le système informatique à :
- commander la caméra pour réacquérir l'image numérique plusieurs fois ; et
- déterminer la valeur de tenue des couleurs plusieurs fois après la réacquisition de l'image numérique ; et
- calculer une valeur statistique de tenue des couleurs calculée à partir de la valeur de tenue des couleurs déterminée plusieurs fois.

9. Dispositif informatique portatif selon une quelconque des revendications précédentes, dans lequel un quelconque des éléments suivants :
- le dispositif informatique portatif comprend en outre un écran, dans lequel l'exécution des instructions exécutables par la machine entraîne en outre l'affichage de la valeur de tenue des couleurs par le système informatique ;
- l'exécution des instructions exécutables par la machine entraîne en outre la mémorisation de la valeur de tenue des couleurs par le système informatique dans la mémoire ; et
- l'exécution des instructions exécutables par la machine entraîne en outre la mémorisation de la valeur de tenue des couleurs par le système informatique dans une base de données via une connexion réseau.

10. Dispositif informatique portatif selon une quelconque des revendications précédentes, dans lequel l'exécution des instructions exécutables par la machine amène en outre le système informatique à :
- déterminer une mesure de qualité d'image de l'image numérique ; et
- afficher un message d'avertissement de qualité d'image (600) sur l'écran si la mesure de qualité d'image se situe en dehors d'une plage de mesure de qualité d'image prédéterminée et/ou suspendre la détermination de la valeur de tenue des couleurs.

11. Dispositif informatique portatif selon une quelconque des revendications précédentes, dans lequel la région de référence de couleur comprend au moins une région de couleur d'origine (130) et plusieurs régions de couleurs dégradées (128).
dans lequel la réception de la distance de couleur de référence pour chacune des valeurs de tenue des couleurs en utilisant la mesure de la région de référence de couleur comprend :
- le calcul d'une distance de couleur mesurée entre chacune des régions de couleurs dégradées et au moins une région de couleur d'origine ; et
- l'attribution de la distance de couleur mesurée de chacune des régions de couleurs dégradées à une des valeurs de tenue des couleurs afin d'étalonner le calcul de la valeur de tenue des couleurs pixel par pixel.

12. Dispositif informatique portatif selon une quelconque des revendications 1 à 10, dans lequel la région de référence de couleur comprend plusieurs régions de couleur prédéfinies, chacune ayant une valeur de couleur prédéterminée dans un espace colorimétrique choisi, dans lequel l'étalonnage de la valeur de tenue des couleurs pixel par pixel comprend :
- la détermination d'une valeur de couleur mesurée dans l'espace colorimétrique choisi pour chacune des régions de couleur prédéfinies ;
- la transformation de l'image numérique en l'espace colorimétrique choisi en utilisant une différence entre la valeur de couleur prédéterminée et la valeur de couleur mesurée de chacune des régions de couleur prédéfinies, dans lequel la transformation étalonne le calcul de la valeur de tenue des couleurs pixel par pixel, dans lequel la distance de couleur de référence de chacune des valeurs de tenue des couleurs est prédéfinie dans l'espace colorimétrique choisi, dans lequel facultativement les régions de couleur prédéfinies peuvent être une quelconque des suivantes : une échelle de gris ou une distribution polychromatique de couleurs.

13. Procédé de détermination d'une valeur de tenue des couleurs (140), dans lequel le procédé comprend de :
- commander (300) une caméra (110) pour acquérir une image numérique (120) ;
- identifier (302) une zone de référence (122) dans l'image numérique ;
- identifier (304) une zone d'échantillonnage (124) dans l'image numérique ;
- identifier (306) une zone de référence de couleur (126) dans l'image numérique ;
- recevoir (308) une distance de couleur de référence (136) pour chacune des multiples valeurs de tenue des couleurs (140) ;
- calculer (310) une distance de couleur d'échantillon pixel par pixel (134) entre une valeur de couleur d'échantillon de pixels individuels dans la zone d'échantillonnage et une couleur de référence de la zone de référence ;
- calculer (314) une valeur de tenue des couleurs pixel par pixel (138) des pixels individuels de la zone d'échantillon en comparant la distance de couleur de référence de chacune des multiples valeurs de tenue des couleurs avec la distance de couleur d'échantillon pixel par pixel, dans lequel le calcul de la valeur de tenue des couleurs pixel par pixel est étalonné en utilisant une mesure de couleur de la zone de référence de couleur ; et
- sélectionner (316) une valeur de tenue des couleurs (140) pour la zone d'échantillon en utilisant la valeur de tenue des couleurs pixel par pixel des pixels individuels dans la zone d'échantillon ;
dans lequel le procédé comprend en outre une des opérations suivantes :
- la construction d'un histogramme de valeurs (400) à partir de la valeur de tenue des couleurs pixel par pixel de chaque pixel de la zone d'échantillon, dans lequel la valeur de tenue des couleurs de la zone d'échantillon es sélectionnée en déterminant une valeur caractéristique (404) de l'histogramme de valeurs ;
- la construction d'un histogramme de valeurs à partir des distances de couleurs des échantillons pixel par pixel, dans lequel une distance de couleur d'échantillon combinée pixel par pixel est calculée en déterminant une valeur caractéristique de l'histogramme de valeurs, dans lequel la valeur de tenue des couleurs de la zone d'échantillon est calculée en utilisant la valeur de tenue des couleurs combinée pixel par pixel.

14. Programme informatique comprenant des instructions exécutables par machine (119) destinées à être exécutées par un système informatique (102) commandant un dispositif informatique portable (100), dans lequel le dispositif informatique portable comprend une caméra (110) configurée pour acquérir une image numérique (120), dans lequel l"exécution des instructions exécutables par machine amène le système informatique à :
- commander (300) la caméra pour acquérir l'image numérique ;
- identifier (302) une zone de référence (122) dans l'image numérique ;
- identifier (304) une zone d'échantillonnage (124) dans l'image numérique ;
- identifier (306) une zone de référence de couleur (126) dans l'image numérique ;
- recevoir (308) une distance de couleur de référence (136) pour chacune des multiples valeurs de tenue des couleurs (140) ;
- calculer (310) une distance de couleur d'échantillon pixel par pixel (134) entre une valeur de couleur d'échantillon de pixels individuels dans la zone d'échantillonnage et une couleur de référence de la zone de référence ;
- calculer (314) une valeur de tenue des couleurs pixel par pixel (138) des pixels individuels de la zone d'échantillon en comparant la distance de couleur de référence de chacune des multiples valeurs de tenue des couleurs avec la distance de couleur d'échantillon pixel par pixel, dans lequel le calcul de la valeur de tenue des couleurs pixel par pixel est étalonné en utilisant une mesure de couleur de la zone de référence de couleur ; et
- sélectionner (316) une valeur de tenue des couleurs (140) pour la zone d'échantillon en utilisant la valeur de tenue des couleurs pixel par pixel des pixels individuels de la zone d'échantillon, dans lequel l'exécution des instructions exécutables par machine amène en outre le système informatique à effectuer une des opérations suivantes :
- construire un histogramme de valeurs (400) à partir de la valeur de tenue des couleurs pixel par pixel de la zone d'échantillon, dans lequel la valeur de tenue des couleurs de la zone d'échantillon est sélectionnée en déterminant une valeur caractéristique (404) de l'histogramme de valeurs et
- construire un histogramme de valeurs à partir des distances de couleurs pixel par pixel de l'échantillon, dans lequel une distance de couleur d'échantillon combinée pixel par pixel est calculée en déterminant une valeur caractéristique de l'histogramme de valeurs, dans lequel la valeur de tenue des couleurs de la zone d'échantillon est calculée en utilisant la valeur de tenue des couleurs pixel par pixel combinée.
